# EUROPEAN PATENT SPECIFICATION

(11) **EP 3 008 970 B1**
(45) Date of publication and mention of the grant of the patent: **29.04.2020**
(21) Application number: 14810625.5
(22) Date of filing: 13.06.2014
(51) Int. Cl.: H04M 1/725, H04W 80/12, H04W 76/10, H04W 8/00

(54) **METHOD AND APPARATUS FOR DISPLAYING APPLICATION DATA IN WIRELESS COMMUNICATION SYSTEM**
VERFAHREN UND VORRICHTUNG ZUR ANZEIGE VON ANWENDUNGSDATEN IN EINEM DRAHTLOSKOMMUNIKATIONSSYSTEM
PROCÉDÉ ET APPAREIL POUR L'AFFICHAGE DE DONNÉES D'APPLICATION DANS UN SYSTÈME DE COMMUNICATION SANS FIL

(30) Priority: 14.06.2013 IN 2604CH2013; 21.05.2014 IN CH26042013
(43) Date of publication of application: 20.04.2016
(73) Proprietor: Samsung Electronics Co., Ltd., Gyeonggi-do 16677 (KR)
(72) Inventor: VEDULA, Kiran Bharadwaj, Bangalore 560037 (IN); KIM, Jun-Hyung, Yongin-si Gyeonggi-do 446-906 (KR)
(74) Representative: HGF Limited
(86) International application number: PCT/KR2014/005196
(87) International publication number: WO 2014/200299

(56) References cited:
- US-A1- 2007 220 562
- US-A1- 2009 193 340
- US-A1- 2011 246 904
- US-A1- 2012 075 204
- US-A1- 2012 243 524
- US-A1- 2013 033 496
- US-A1- 2013 033 496
- Wi-Fi Alliance: "Wi-Fi Alliance Technical Committee Wi-Fi Display Technical Task Group Wi-Fi Display Technical Specification", , 1 January 2012 (2012-01-01), pages 1-149, XP055320680, Retrieved from the Internet: URL:https://www.scribd.com/doc/250439511/W i-Fi-Display-Technical-Specification-v1-0- 0 [retrieved on 2016-11-17]
- 'Wi-Fi Alliance Member Symposium' WI-FI ALLIANCE 01 November 2012, GUANGZHOU, CHINA, pages 1 - 92, XP055301695 Retrieved from the Internet: <URL:http://www.cszit.com/upFile/201211/201 21114105435.pdf>
- Business Editors/high-Tech Writers ET AL: "Microchip Technology Unveils Industry's First Serial EEPROMs Supporting VESA E-EDID 1.3 Standard", Business Wire, 23 January 2002 (2002-01-23), page 1, XP055453143, New York Retrieved from the Internet: URL:http://read.pudn.com/downloads110/eboo k/456020/E-EDID%20Standard.pdf [retrieved on 2018-02-21]

## Description

### Technical Field

The present invention relates to a method and apparatus for displaying application data in a wireless communication system.

### Background Art

Recently, a wireless fidelity (Wi-Fi) display (WFD) standard has been defined based on a requirement to transmit audio/video (AV) data while satisfying high quality and low latency. A WFD network is a network system suggested by the Wi-Fi Alliance® that enables Wi-Fi devices to be connected to each other in a peer-to-peer fashion without participating in a home network, an office network, or a hot-spot network. WFD devices within a WFD network may be capable of discovering information regarding each other, e.g., capability information, establishing a WFD session, and rendering content received during the WFD session. Typically, a WFD network comprises a WFD source device and one or more WFD sink devices.

Between a WFD source and a WFD sink device, first sequence of message (M1 & M2) exchanges is related to device discovery and service discovery. After the device discovery and optional service discovery procedures are completed, the WFD source device and the WFD sink device are assigned an internet protocol (IP) address. Thereafter, a transmission Control Protocol (TCP) connection is established between the source device and the sink device after which real time streaming protocol (RTSP) and real time protocol (RTP) stacks on both devices become active.

Over RTSP, capability negotiation (M3 & M4) procedures are performed between the WFD source device and the WFD sink device. Then, WFD session control messages are exchanged between the WFD source device and the WFD sink device. Additionally, data session over RTP is established between WFD source device and WFD sink device in parallel.

For WFD devices such as mobile phone, size of display is very limited. Because of restricted size, users maynot be able to viewentirecontent on the WFD device. Also, the displayed content is small in size.

Current Wi-Fi display specificationdefined by Wi-Fi Alliance provides a solution for mirroring content on the mobile device to a larger display like TV or a projector. However, the content on the mobile device is as such mirrored to the bigger screen without any intelligence, thereby leading to poor user experience.

The Technical Specification for Wi-Fi Display (WFD) (Wi-Fi Alliance, "Wi-Fi Alliance Technical Committee Wi-Fi Display Technical Task Group Wi-Fi Display Technical Specification", (20120101) - URL: https://www.scribd.com/doc/250439511/Wi-Fi-Display-Technical-Specification-v1-0-0) describes how information concerning the type of wifi sink device and the user interface of the wifi sink device may be used as parameters in the display of application data on the sink device when using WFD.

US2007/220562 A1 describes an apparatus and method for selectively rendering media content on remote displays. The apparatus detects a display server in a wireless local area network, receives the display server capabilities for presenting content, creates displayable content conforming to the capabilities of the display server, and transmits the displayable content to the display server.

### Disclosure of Invention

### Technical Problem

Therefore, there is a need of method and system for providing enhanced mirroring experience of data on at least one sink device.

### Solution to Problem

According to a first aspect of the present invention, there is provided a method according to claim 1.

According to a second aspect of the present invention, there is provided a method according to claim 6.

According to a third aspect of the present invention, there is provided a first device according to claim 11.

According to a fourth aspect of the present invention, there is provided a second device according to claim 12.

Also disclosed is a method for displaying application data by a first device in a wireless communication system. The method comprises transmitting, to a second device information as to whether the first device can display data of an application run by the second device, if a connection to the second device is established, receiving, from the second device, the application data and display information for displaying the application data, if the first device can display the application data, and display the application data based on the display information.

Also disclosed is a method for transmitting information for displaying application data by a second device in a wireless communication system. The method comprises receiving, from a first device, information as to whether the first device can display data of an application run by the second device, if a connection to the first device is established, and transmitting the application data and display information for displaying the application data, to the first device, if the first device can display the application data.

### Brief Description of Drawings

The aforementioned aspects and other features of the present invention will be explained in the following description, taken in conjunction with the accompanying drawings, wherein:
Figure 1 illustrates a system for providing enhanced mirroring experience of data on at least one sink device according to an embodiment.
Figure 2 illustrates a pictorial representation of enhanced mirroring of application session containing Vcard information on a sink device, according to one exemplary embodiment.
Figure 3 illustrates a pictorial representation of enhanced mirroring of application session containing application screen information on a sink device, according to another exemplary embodiment.
Figure 4 illustrates a flow diagram of a method of providing enhanced mirroring experience of data to a sink device, according to one embodiment.
Figure 5 illustrates a flow diagram of a method of providing enhanced mirroring experience of data to at least one sink device according to one embodiment.

### Best Mode for Carrying out the Invention

The embodiments of the present invention will now be described in detail with reference to the accompanying drawings. However, the present invention is not limited to the embodiments. The present invention can be modified in various forms. Thus, the embodiments of the present invention are only provided to explain more clearly the present invention to the ordinarily skilled in the art of the present invention. In the accompanying drawings, like reference numerals are used to indicate like components.

The specification may refer to "an", "one" or "some" embodiment(s) in several locations. This does not necessarily imply that each such reference is to the same embodiment(s), or that the feature only applies to a single embodiment. Single features of different embodiments may also be combined to provide other embodiments.

As used herein, the singular forms "a", "an" and "the" are intended to include the plural forms as well, unless expressly stated otherwise. It will be further understood that the terms "includes", "comprises", "including" and/or "comprising" whenused in this specification, specify the presence of stated features, integers, steps, operations, elements and/or components, but do not preclude the presence or addition of oneor more other features integers, steps, operations, elements, components, and/or groups thereof. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

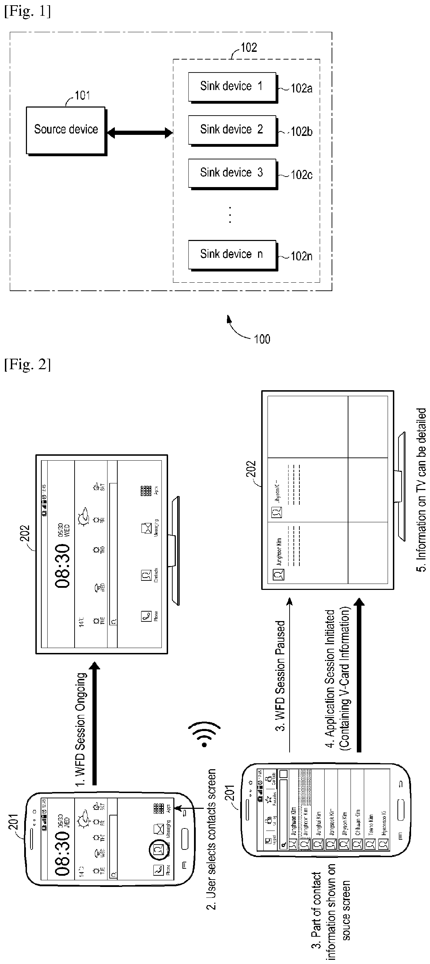

Figure 1 illustrates a system 100 for providing enhanced data to at least one sink device in a Wi-Fi display environment, according to one embodiment. The system 100 comprises one source device 101 and one or more Wi-Fi sink devices 102 such as a sink device 1 102a, a sink device 2 102b, a sink device 3 102c ...... a sink device n 102n.

A Wi-Fi display (WFD) session is established between a WFD source device and a WFD sink device, where the WFD source device provides content and the WFD sink device consumes the content. In the present invention, the WFD source device mirrors data with the WFD sink device in an enhanced manner.

The system 100 comprises means for establishing a connection between a source device 101 and the at least one sink device, means for exchanging capability information between the source device 101 and the at least one sink device, means for initiating an enhanced display session between the source device 101 and the at least one sink device, means for providing session data with application description format (ADF) information to the at least one sink device for the enhanced display session, and means for displaying the data on the at least one sink device formatted according to the ADF information. In one embodiment, the means for establishing a connection, means for exchanging capability information, means for establishing an enhanced display session, and means for sendingsession data include but not limited to, one or more of a multiplexer, processor, encoder, and transceiver at the source device 101. Further, the means for displaying the data includes display unit.

### Extended Data Transferring

In exemplary embodiment, whenever a user mirrors display screen displayed on the WFD source device to the WFD sink device, the user has an option to select an application such as phonebook to view contact details of friends or applicationslist to view all the applications installed on the mobile phone (i.e., the WFD source device). Once the phonebook is mirrored with the WFD sink device, the user is able to see not only the contact details of the selected contact but also the additional stored information of the selected contact.

Figure 2 illustrates a pictorial representation of enhanced mirroring of application session containing Vcard information on a sink device, according to one exemplary embodiment. In Figure 2, a smartphone 201 is a WFD source device and a television 202 is a WFD sink device. At first, user mirrors a video from the smartphone 201 to the TV 202. During an ongoing WFD session, the user selects "Contacts" application as a contact application on the smartphone 201. Then, the ongoing WFD session is paused and the smartphone 201 opens the contact application and new application session starts between the smartphone 201 and the TV 202 which contains relevant application information i.e., the application information is sent to the TV 202. Consequently, application related detailed information is shown on the display screen of the TV 202.

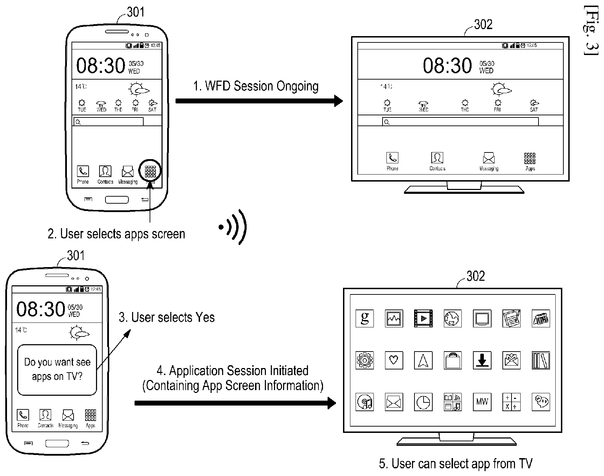

Figure 3 illustrates a pictorial representation of enhanced mirroring of application session containing application screen information on a sink device, according to another exemplary embodiment. In Figure 3, a smart phone 301 is a WFD source device and a television 302 is a WFD sink device. User mirrors a video from the smartphone 301 to the TV 302. During an ongoing session, the user selects "Apps" icon related to an application list on the smartphone 301. A notification (e.g. "Do you want see apps on TV?") is popped on the display screen of the smartphone 301 to confirm whether the applications list is to be displayed on the larger screen of the TV 302 with which a WFD session is ongoing. If the user confirms, then, an application session is initiated between the smartphone 301(WFD source device) and the TV 302 (WFD sink device) containing the application information which may in affect also contain the sink screen information. Thus, the user can select a desired application from the applicationslist displayed on the TV. When the user selects the desired application, a notification is sent to the mobile phone using the back channel.

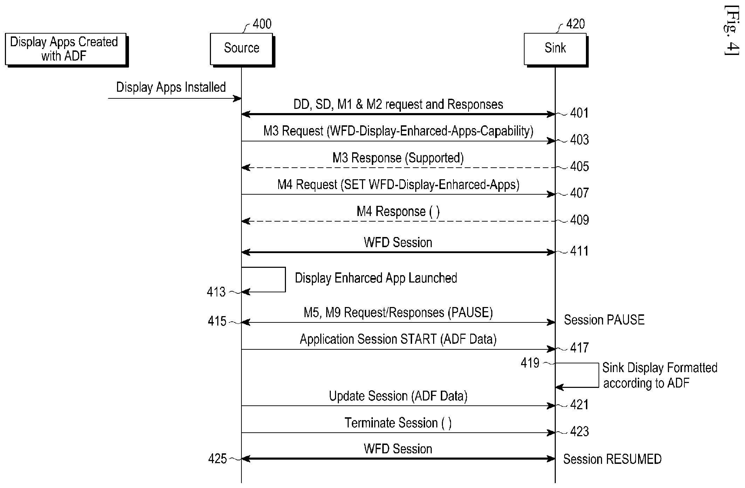

Figure 4 illustrates a flow diagram of a method of providing enhanced data to a sink device, according to one embodiment.

In one embodiment, a WFD source device 400 has been configured with an enhanced display application. The enhanced display application can either be installed in the WFD source device 400 or can be embedded in the WFD source device 400 at the stage of manufacturing of the WFD source device 400.

At steps 401 to 409, the WFD source device 400 and a WFD sink device 420 may exchange capability information with each other. Specifically, at step 401, the WFD source device 400 and the WFD sink device 420 may exchange messages M1 and M2 for device discovery (DD) and service discovery (SD) operations, with each other.

If a connection between the WFD source device 400 and the WFD sink device 420 is established through the operation at step 401, the WFD source device 400 may send an M3 request (Display _Enhanced_Apps_Support) message for requesting support of the running of an enhanced display application, to the WFD sink device 420 at step 403. In response to the M3 request, the WFD sink device 420 may send an M3 response (Support) message including information indicating whether the running of the enhanced display application is supported, to the WFD source device 400 at step 405.

If the WFD sink device 420 supports the running of the enhanced display application, the WFD source device 400 may send an M4 request (SET WFD Display_Enhanced_Apps_Support) message to the WFD sink device 420 at step 407. In response, the WFD sink device 420 may send a response message to the M4 request message to the WFD source device 400 at step 409.

During the exchange of capability information, the WFD source device 400 understands that the WFD sink device 420 has support for the enhanced display applications. In one embodiment, capability of the WFD sink device 420 to run enhanced display applications is indicated using "Display_Enhanced_Apps_Support" parameter exchanged between the WFD source device 400 and the WFD sink device 420 during the exchange of capability information. For example, a value of '1' indicates that the feature of running an enhanced display application is supported by the WFD sink device 420 while value '0' indicates that the feature is not supported by the WFD sink device 420. Another parameter "Max_No_Of_Display_Enhanced_Apps" is used to indicate maximum number of display enhanced apps that a sink device supports running parallelly.

In one embodiment, as shown at step 411, there is a regular display session ongoing between the WFD source device 400 and the WFD sink device 420. At the WFD source device 400, the user starts an enhanced display application at step 413. Then, at step 415, a RTSP PAUSE (M5, M9 request/response (pause)) message is sent from the WFD source device 400 to the WFD sink device 420 and the regular display session is paused. Further, at step 417, an application session is started between the WFD source device 400 and the WFD sink device 420 which also includes application description format (ADF) information. At step 419, a sink formatted according to the ADF information may be displayed.

In case WFD source device 400 sends a request with new ADF information to the WFD sink device 420, the ongoing application session on the WFD session is updated accordingly at step 421. Once the ongoing application session between the WFD source device 400 and the WFD sink device 420 terminates at step 423, the earlier WFD session which was paused, is resumed between the WFD source device 400 and the WFD sink device 420 at step 425.

In one embodiment, the present invention also requires a standard format for description of an enhanced display application. Any application which is enhanced for display use cases as described above is called as enhanced display application. The application description is provided in the form of an XML file. An exemplary application description is given in Table 1.

### Table 1

**[Table 1]**

| |
|---|
| ```
   <?xmlversion="1.0"encoding="UTF-8"?>
   <xsd:schemaxmlns:xsd="http://www.w3.org/2001 /XMLSchema"
   targetNamespace="http://www.wi-fi.org/xmlschema/WfaDisplayServiceSchema"
   xmlns:tns="http://www.wi-fi.org/xmlschema/WfaDisplayServiceSchema"
       elementForm Default="qualified">
       <!--appType indicates the application type. -->
   <xsd:simpleTypename="appType">
   <xsd:restrictionbase="xsd:string">
   <xsd:enumerationvalue="enhancedData"/>
   <xsd:enumerationvalue="excluded Data"/>
   </xsd: restriction>
       </xsd:simpleType>
       <!-- name indicates the application name. -->
   <xsd:simpleTypename="name">
   <xsd:restrictionbase="xsd:string"/>
       </xsd:simpleType>
       <!--Applicationlnfo describes application information. -->
   <xsd:complexTypename="applicationInfo">
   <xsd:sequence>
   <xsd:elementname="name"type="xsd:string"></xsd :element>
   <xsd:elementname="type"type="tns:appType"></xsd:element>
   </xsd:sequence>
       </xsd:complexType>
   </xsd:schema>
``` |

The schema for individual applications "AppData" is defined as per the application schema. The App schema includes but not limited to, rules on type of data, layout, UI, data etc.

The schema for sink configuration "SinkData" is defined as per the sink schema defined by the sink devices. Sink schema includes but not limited to, rules on sink layout, size, orientation etc.

In one embodiment, the XML file contains information about one or more applications. This is required if the WFD sink device supports running multiple enhanced display applications at the same time. An example XML file which has information related to two applications is shown in Table 2.

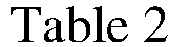

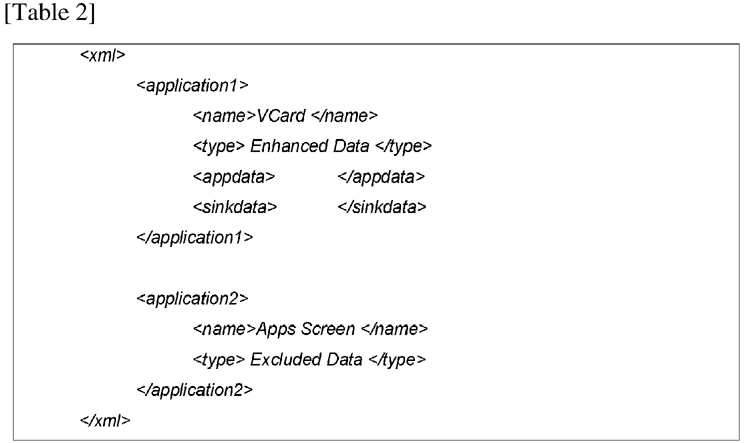

The system and method of the present invention is configured to provide support to following types of applications:
a) Excluded Data Application- Applications of this type wants to display data on larger screen which is excluded from displaying on the mobile screen because of size limitations.
b) Enhanced Data Application - Applications of this type wants to display data on larger screen which is enhanced data from the data that is displayed on the mobile device.
c) Original/primary Data Application - Applications of this type wants to display same primary data (which displays on the source device) on a larger screen of the sink device.

In an embodiment of the present invention where the WFD source device has split screen functionality inbuilt and the hardware supports running two applications in the foreground, such source device has an option to still display two applications in the foreground but one on the source device itself and one on the sink device which is associated with the source device. Because of which the screen usage of each application increases and provides good user experience.

### Virtual Screen Mirroring

In one embodiment of Virtual screen mirroring, the WFD source device has multiple screens in which one of the screens is the main screen and other screens are virtual screens. Instead of mirroring the main screen, the WFD source device mirrors one of the virtual screens with the WFD sink device. This enables the user to maintain the privacy of the source device.

The source device maintains two or more screen buffers depending on the use case. One screen buffer is dedicated to the main screen. For all the other virtual screens, the WFD source device has either a single screen buffer or individual screen buffer for each of the sink screens.

Whenever a WFD session is started between the WFD source device and the WFD sink device, the WFD source device can choose to start the session with the screen buffer of the main screen or screen buffer of the other virtual screens. The information about which buffer is being used by the source device may be informed to the sink device using a new parameter "Screen Buffer Used" exchanged during capability negotiation phase. The source device is able to dynamically change the buffer it uses during an ongoing WFD session. By informing the sink device about the buffer change, the sink device will be able to clear the data from its buffer and start receiving data from the newly selected buffer. This will avoid the delay in the WFD session update.

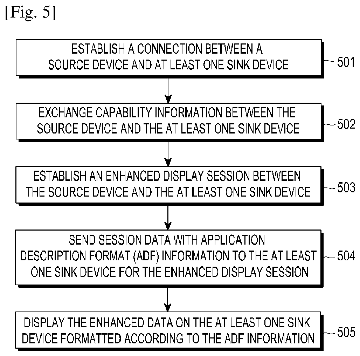

Figure 5 illustrates a flow diagram of method for providing enhanced data to at least one sink device according to one embodiment of the present invention. A connection is established between a source device and the at least one sink device at step 501.Capability information are exchanged between the source device and the at least one sink device at step 502. The capability information includes a request and response messages in respect of the sink device providing support to the enhanced display application. An enhanced display session is established between the source device and the at least one sink device at step 503. Session data with application description format (ADF) information is sent to the at least one sink device for the enhanced display session at step 504. The data is displayed on the at least one sink device, the data having been formatted according to the ADF information at step 505.

Although the invention of the method and system has been described in connection with the embodiments of the present invention illustrated in the accompanying drawings, it is not limited thereto. It will be apparent to those skilled in the art that various substitutions, modifications and changes may be made thereto without departing from the scope of the invention.

## Claims

1. A method for displaying application data in a wireless communication system, the method being carried out by a first device, the first device being a sink device, and comprising:
receiving, from a second device, the second device being a source device, a request message for requesting support of an enhanced display application;
transmitting (502), to the second device, a first parameter indicating whether the first device supports running an enhanced display application for displaying the application data related to an application run by the second device, and a second parameter indicating maximum number of enhanced display applications that the first device supports running in parallel, when a connection between the first device and the second device is established;
receiving (504), from the second device, the application data to display on a screen of the first device by running the enhanced display application and display information for displaying the application data, when the first parameter indicating the first device supports running the display application; and
displaying (505) the application data based on the display information and the second parameter,
wherein the display information includes layout information of the application data and size information of the application data, and
wherein a size of display according to the size information exceeds a size limitation of the second device.

2. The method of claim 1, wherein the display information further includes at least one of type information and user interface, UI, information of the application data.

3. The method of claim 1, wherein the application data includes application data to be displayed on at least one of a plurality of screens of the second device.

4. The method of claim 1, wherein the enhanced display application further includes an application displaying application data that is permitted to be displayed on both of the second device and the first device, and an application displaying application data that is required to be displayed larger than application data displayed on the second device.

5. The method of claim 1, wherein, if the application data is data corresponding to a plurality of applications, the display information includes information for displaying data corresponding to each of the plurality of applications.

6. A method for transmitting information for displaying application data in a wireless communication system, the method being carried out by a second device, the second device being a source device, and comprising:
transmitting, to a first device, the first device being a sink device, a request message for requesting support of an enhanced display application;
receiving (502), from the first device, a first parameter indicating whether the first device supports running an enhanced display application for displaying the application data related to an application run by the second device, and a second parameter indicating maximum number of enhanced display applications that the first device supports running in parallel, when a connection between the first device and the second device is established; and
transmitting (504) the application data to display on a screen of the first device by running the enhanced display application and display information for displaying the application data, to the first device, when the first parameter indicating the first device supports running the display application,
wherein the display information includes layout information of the application data and size information of the application data, and
wherein a size of display according to the size information exceeds a size limitation of the second device.

7. The method of claim 6, wherein the display information further includes at least one of type information and user interface, UI, information of the application data.

8. The method of claim 6, wherein the application data includes application data to be displayed on at least one of a plurality of screens of the second device.

9. The method of claim 6, wherein the enhanced display application further includes an application displaying application data that is permitted to be displayed on both of the second device and the first device, and an application displaying application data that is required to be displayed larger than application data displayed on the second device.

10. The method of claim 6, wherein if the application data is data corresponding to a plurality of applications, the display information includes information for displaying data corresponding to each of the plurality of applications.

11. A first device for displaying application data in a wireless communication system, the first device being a sink device and being configured to perform at least one of methods described in claims 1 to 5.

12. A second device for displaying application data in a wireless communication system, the second device being a source device and being configured to perform at least one of methods described in claims 6 to 10.

## Patentansprüche

1. Verfahren zur Anzeige von Anwendungsdaten in einem Drahtloskommunikationssystem, wobei das Verfahren von einer ersten Vorrichtung ausgeführt wird, wobei die erste Vorrichtung eine Senkevorrichtung ist; und umfassend:
ein Empfangen, von einer zweiten Vorrichtung, wobei die zweite Vorrichtung eine Quellvorrichtung ist, einer Anforderungsmitteilung zum Anfordern von Support einer verbesserten Anzeigeanwendung;
ein Übermitteln (502), an die zweite Vorrichtung, eines ersten Parameters, der angibt, ob die erste Vorrichtung das Ausführen einer verbesserten Anzeigeanwendung zum Anzeigen der auf eine von der zweiten Vorrichtung ausgeführte Anwendung bezogenen Anwendungsdaten unterstützt, und eines zweiten Parameters, der eine maximale Anzahl von verbesserten Anzeigeanwendungen angibt, deren parallele Ausführung die erste Vorrichtung unterstützt, wenn eine Verbindung zwischen der ersten Vorrichtung und der zweiten Vorrichtung eingerichtet ist;
ein Empfangen (504), von der zweiten Vorrichtung, der auf einem Bildschirm der ersten Vorrichtung durch Ausführen der verbesserten Anzeigeanwendung anzuzeigenden Anwendungsdaten und von Anzeigeinformationen zum Anzeigen der Anwendungsdaten, wenn der erste Parameter angibt, dass die erste Vorrichtung die Ausführung der Anzeigeanwendung unterstützt; und
ein Anzeigen (505) der Anwendungsdaten basierend auf den Anzeigeinformationen und dem zweiten Parameter,
wobei die Anzeigeinformationen Layoutinformationen der Anwendungsdaten und Größeninformationen der Anwendungsdaten beinhalten, und
wobei eine Anzeigegröße gemäß der Größeninformationen eine Größenbeschränkung der zweiten Vorrichtung überschreitet.

2. Verfahren nach Anspruch 1, wobei die Anzeigeinformationen ferner Typinformationen und/oder Nutzerschnittstellen-UI-Informationen der Anwendungsdaten beinhalten.

3. Verfahren nach Anspruch 1, wobei die Anwendungsdaten Anwendungsdaten beinhalten, die auf mindestens einem einer Vielzahl von Bildschirmen der zweiten Vorrichtung anzuzeigen sind.

4. Verfahren nach Anspruch 1, wobei die verbesserte Anzeigeanwendung ferner eine Anwendung, die Anwendungsdaten anzeigt, deren Anzeige auf der zweiten Vorrichtung und der ersten Vorrichtung zugelassen ist, und eine Anwendung, die Anwendungsdaten anzeigt, die größer als die auf der zweiten Vorrichtung angezeigten Anwendungsdaten angezeigt werden müssen, beinhaltet.

5. Verfahren nach Anspruch 1, wobei, wenn die Anwendungsdaten Daten sind, die einer Vielzahl von Anwendungen entsprechen, die Anzeigeinformationen Informationen zum Anzeigen von Daten entsprechend jeder der Vielzahl von Anwendungen beinhalten.

6. Verfahren zum Übermitteln von Informationen zur Anzeige von Anwendungsdaten in einem Drahtloskommunikationssystem, wobei das Verfahren von einer zweiten Vorrichtung ausgeführt wird, wobei die zweite Vorrichtung eine Quellvorrichtung ist; und umfassend:
ein Übermitteln, an eine erste Vorrichtung, wobei die erste Vorrichtung eine Senkevorrichtung ist, einer Anforderungsmitteilung zum Anfordern von Support einer verbesserten Anzeigeanwendung;
ein Empfangen (502), von der ersten Vorrichtung, eines ersten Parameters, der angibt, ob die erste Vorrichtung das Ausführen einer verbesserten Anzeigeanwendung zum Anzeigen der auf eine von der zweiten Vorrichtung ausgeführte Anwendung bezogenen Anwendungsdaten unterstützt, und eines zweiten Parameters, der eine maximale Anzahl von verbesserten Anzeigeanwendungen angibt, deren parallele Ausführung die erste Vorrichtung unterstützt, wenn eine Verbindung zwischen der ersten Vorrichtung und der zweiten Vorrichtung eingerichtet ist; und
ein Übermitteln (504), der auf einem Bildschirm der ersten Vorrichtung anzuzeigenden Anwendungsdaten durch Ausführen der verbesserten Anzeigeanwendung und Anzeigen von Anzeigeinformationen zum Anzeigen der Anwendungsdaten, an die erste Vorrichtung, wenn der erste Parameter angibt, dass die erste Vorrichtung die Ausführung der Anzeigeanwendung unterstützt,
wobei die Anzeigeinformationen Layoutinformationen der Anwendungsdaten und Größeninformationen der Anwendungsdaten beinhalten, und
wobei eine Anzeigegröße gemäß der Größeninformationen eine Größenbeschränkung der zweiten Vorrichtung überschreitet.

7. Verfahren nach Anspruch 6, wobei die Anzeigeinformationen ferner Typinformationen und/oder Nutzerschnittstellen-UI-Informationen der Anwendungsdaten beinhalten.

8. Verfahren nach Anspruch 6, wobei die Anwendungsdaten Anwendungsdaten beinhalten, die auf mindestens einem einer Vielzahl von Bildschirmen der zweiten Vorrichtung anzuzeigen sind.

9. Verfahren nach Anspruch 6, wobei die verbesserte Anzeigeanwendung ferner eine Anwendung, die Anwendungsdaten anzeigt, deren Anzeige auf der zweiten Vorrichtung und der ersten Vorrichtung zugelassen ist, und eine Anwendung, die Anwendungsdaten anzeigt, die größer als die auf der zweiten Vorrichtung angezeigten Anwendungsdaten angezeigt werden müssen, beinhaltet.

10. Verfahren nach Anspruch 6, wobei, wenn die Anwendungsdaten Daten sind, die einer Vielzahl von Anwendungen entsprechen, die Anzeigeinformationen Informationen zum Anzeigen von Daten entsprechend jeder der Vielzahl von Anwendungen beinhalten.

11. Erste Vorrichtung zum Anzeigen von Anwendungsdaten in einem Drahtloskommunikationssystem, wobei die erste Vorrichtung eine Senkevorrichtung und konfiguriert ist, um mindestens eines der in Ansprüchen 1 bis 5 beschriebenen Verfahren auszuführen.

12. Zweite Vorrichtung zum Anzeigen von Anwendungsdaten in einem Drahtloskommunikationssystem, wobei die zweite Vorrichtung eine Quellvorrichtung und konfiguriert ist, um mindestens eines der in Ansprüchen 6 bis 10 beschriebenen Verfahren auszuführen.

## Revendications

1. Procédé d'affichage de données d'application dans un système de communication sans fil, le procédé étant mis en œuvre par un premier dispositif, le premier dispositif étant un dispositif récepteur, et comprenant :
la réception, depuis un deuxième dispositif, le deuxième dispositif étant un dispositif source, d'un message de requête pour demander le support d'une application d'affichage amélioré ;
la transmission (502), au deuxième dispositif, d'un premier paramètre indiquant si le premier dispositif supporte l'exécution d'une application d'affichage amélioré pour afficher les données d'application liées à une application exécutée par le deuxième dispositif, et un deuxième paramètre indiquant un nombre maximum d'applications d'affichage amélioré que le premier dispositif supporte en exécution en parallèle, quand une connexion entre le premier dispositif et le deuxième dispositif est établie ;
la réception (504), depuis le deuxième dispositif, des données d'application pour afficher sur un écran du premier dispositif en exécutant l'application d'affichage amélioré et d'informations d'affichage pour l'affichage des données d'application, quand le premier paramètre indique que le premier dispositif supporte l'exécution de l'application d'affichage ; et
l'affichage (505) des données d'application sur la base des informations d'affichage et du deuxième paramètre,
dans lequel les informations d'affichage incluent des informations d'agencement des données d'application et des informations de taille des données d'application, et
dans lequel une taille d'affichage en fonction des informations de taille dépasse une limite de taille du deuxième dispositif.

2. Procédé selon la revendication 1, dans lequel les informations d'affichage incluent en outre au moins l'une parmi des informations de type et des informations d'interface utilisateur, UI, des données d'application.

3. Procédé selon la revendication 1, dans lequel les données d'application incluent des données d'application devant être affichées sur au moins l'un d'une pluralité d'écrans du deuxième dispositif.

4. Procédé selon la revendication 1, dans lequel l'application d'affichage amélioré inclut en outre une application affichant des données d'application qui peuvent être affichées à la fois sur le deuxième dispositif et le premier dispositif, et une application affichant des données d'application qui doivent être affichées plus grandes que des données d'application affichées sur le deuxième dispositif.

5. Procédé selon la revendication 1, dans lequel, si les données d'application sont des données correspondant à une pluralité d'applications, les informations d'affichage incluent des informations pour afficher des données correspondant à chacune de la pluralité d'applications.

6. Procédé de transmission d'informations pour afficher des données d'application dans un système de communication sans fil, le procédé étant mis en œuvre par un deuxième dispositif, le deuxième dispositif étant un dispositif source, et comprenant :
la transmission, à un premier dispositif, le premier dispositif étant un dispositif récepteur, d'un message de requête pour demander le support d'une application d'affichage amélioré ;
la réception (502), depuis le premier dispositif, d'un premier paramètre indiquant si le premier dispositif supporte l'exécution d'une application d'affichage amélioré pour afficher les données d'application liées à une application exécutée par le deuxième dispositif, et un deuxième paramètre indiquant un nombre maximum d'applications d'affichage amélioré que le premier dispositif supporte en exécution en parallèle, quand une connexion entre le premier dispositif et le deuxième dispositif est établie ; et
la transmission (504) des données d'application pour afficher sur un écran du premier dispositif en exécutant l'application d'affichage amélioré et d'informations d'affichage pour l'affichage des données d'application, au premier dispositif, quand le premier paramètre indique que le premier dispositif supporte l'exécution de l'application d'affichage,
dans lequel les informations d'affichage incluent des informations d'agencement des données d'application et des informations de taille des données d'application, et
dans lequel une taille d'affichage en fonction des informations de taille dépasse une limite de taille du deuxième dispositif.

7. Procédé selon la revendication 6, dans lequel les informations d'affichage incluent en outre au moins l'une parmi des informations de type et des informations d'interface utilisateur, UI, des données d'application.

8. Procédé selon la revendication 6, dans lequel les données d'application incluent des données d'application devant être affichées sur au moins l'un d'une pluralité d'écrans du deuxième dispositif.

9. Procédé selon la revendication 6, dans lequel l'application d'affichage amélioré inclut en outre une application affichant des données d'application qui peuvent être affichées à la fois sur le deuxième dispositif et le premier dispositif, et une application affichant des données d'application qui doivent être affichées plus grandes que des données d'application affichées sur le deuxième dispositif.

10. Procédé selon la revendication 6, dans lequel, si les données d'application sont des données correspondant à une pluralité d'applications, les informations d'affichage incluent des informations pour afficher des données correspondant à chacune de la pluralité d'applications.

11. Premier dispositif pour afficher des données d'application dans un système de communication sans fil, le premier dispositif étant un dispositif récepteur et étant configuré pour exécuter au moins l'un des procédés décrits dans les revendications 1 à 5.

12. Deuxième dispositif pour afficher des données d'application dans un système de communication sans fil, le deuxième dispositif étant un dispositif source et étant configuré pour exécuter au moins l'un des procédés décrits dans les revendications 6 à 10.
